# FASCICULE DE BREVET EUROPEEN

(11) **EP 3 759 430 B1**
(45) Date de publication et mention de la délivrance du brevet: **12.01.2022**
(21) Numéro de dépôt: 19717520.1
(22) Date de dépôt: 28.02.2019
(51) Int. Cl.: G01C 11/02, H04N 13/243

(54) **SYSTEME DE MODELISATION TRIDIMENSIONNELLE D'UNE SCENE PAR PHOTOGRAMMETRIE MULTI-VUE**
3D-SZENENMODELLIERUNGSSYSTEM DURCH FOTOGRAMMETRIE MIT MEHREREN ANSICHTEN
3D SCENE MODELLING SYSTEM BY MULTI-VIEW PHOTOGRAMMETRY

(30) Priorité: 01.03.2018 FR 1851812
(43) Date de publication de la demande: 06.01.2021
(73) Titulaire: 4D View Solutions, 38000 Grenoble (FR)
(72) Inventeur: MENIER, Clément, 38100 GRENOBLE (FR); BILLON, Ronan, 38100 GRENOBLE (FR); PELORSON, Quentin, 38100 GRENOBLE (FR)
(74) Mandataire: Prugneau, Philippe
(86) Numéro de dépôt international: PCT/FR2019/050465
(87) Numéro de publication internationale: WO 2019/166743

(56) Documents cités:
- US-A1- 2006 029 256
- US-A1- 2015 163 478
- KANADE T ET AL: "VIRTUALIZED REALITY : CONSTRUCTING VIRTUAL WORLDS FROM REAL SCENES", IEEE MULTIMEDIA, IEEE SERVICE CENTER, NEW YORK, NY, US, vol. 4, no. 1, 1 janvier 1997 (1997-01-01) , pages 34-47, XP000685698, ISSN: 1070-986X, DOI: 10.1109/93.580394

## Description

### Domaine technique

L'invention concerne un système de modélisation tridimensionnelle d'une scène par photogrammétrie multi-vue.

### Technique antérieure

La photogrammétrie multi-vue comprend l'enregistrement d'un ensemble de paires de vues planes d'une scène qui permettent d'établir des cartes de profondeur de la scène par stéréoscopie, puis d'utiliser ces cartes de profondeur pour obtenir un modèle tridimensionnel de la scène par mise en œuvre numérique d'algorithmes de modélisation.

Une application importante, mais non unique, du modèle tridimensionnel obtenu est la génération d'images virtuelles de la scène telle qu'observée selon des points de vue arbitraires.

L'acquisition de séquences d'ensembles de prises de vues simultanées de la scène permet de générer des vidéos de celle-ci selon des angles d'observation arbitraires.

La mise en œuvre de la photogrammétrie multi-vue d'une scène en studio requiert des appareils de prise de vue monoscopiques tels que des appareils photos ou des caméras entourant la scène à modéliser de manière à observer celle-ci selon une pluralité de points de vue.

Une modélisation tridimensionnelle est considérée comme requérant, de manière optimale, des paires de caméras alignées verticalement ou horizontalement et une distance angulaire entre les caméras de chaque paire comprise entre 5 et 15 degrés.

Pour des raisons de coûts, les grilles de disposition de caméras ont en pratique des mailles plus larges, identiques entre elles et sensiblement carrées ou rectangulaires, telles que celles de la demande de brevet FR 14 63073.

Conventionnellement, à appareils de prise de vue de performances fixées, l'augmentation de la qualité d'une modélisation tridimensionnelle est comprise par les spécialistes de ce secteur technique comme nécessitant d'augmenter le nombre de caméras utilisées, ce qui se répercute immédiatement en termes d'encombrement et de coût de l'équipement du studio, en particulier lorsque des caméras vidéo sont utilisées.

La demande de brevet US 2006/0029256 divulgue un dispositif d'imagerie comprenant des unités d'imagerie constituées en particulier de paires de caméras, et reconstituant un point de vue différent de celui de ces caméras.

La publication Kanade T. et al : « virtualized reality constructing virtual worlds from real scenes", IEEE Multimedia, IEEE Service Center, New York, US, Vol. 4, no°1, 1997.01.01, pages 34-47, décrit des techniques de reconstructions tridimensionnelles virtuelles à partir d'images réelles capturées en studio.

US 2015/163478 A1 divulgue un système portable de capture d'image stéréoscopique comprenant des caméras arrangées selon deux axes perpendiculaires.

### Exposé de l'invention

Les inventeurs de la présente invention ont déterminé que des associations de caméras disposées de manière optimisée autour d'une scène à modéliser et présentant entre elles des espacements variés pour l'étude stéréoscopique de cette scène fournit aux algorithmes de modélisation une richesse d'information plus importante que si une disposition homogène et un espacement unique entre les caméras associées étaient employés, menant à une amélioration qualitative de la modélisation et permettant de compenser un faible nombre de caméras.

L'invention a pour objectif d'améliorer la qualité de la modélisation tridimensionnelle et/ou d'augmenter le volume de modélisation d'une scène par photogrammétrie multi-vue à nombre et type d'appareils de prise de vue fixés, par rapport aux approches conventionnelles.

Alternativement, l'invention a pour objectif de maintenir ou d'améliorer la qualité de modélisation tridimensionnelle d'une scène par photogrammétrie multi-vue tout en en augmentant le volume de modélisation de la scène et en diminuant le nombre d'appareils de prise de vue, par rapport aux approches conventionnelles.

A cet effet, l'invention a pour objet un système de modélisation tridimensionnelle d'une scène par photogrammétrie multi-vue, comprenant des caméras destinées à être regroupées en paires de caméras placées autour de la scène pour produire des images de celle-ci avec des points de vue différents, les caméras de chaque paire de caméras présentant entre elles un certain espacement intra-paire, et un dispositif de traitement numérique qui, à partir des images produites par les caméras, est configuré pour produire des données de modélisation en appliquant un traitement de stéréoscopie par comparaison entre les images produites respectivement par les deux caméras de chaque paire de caméras, dans lequel lesdites paires de caméras sont distribuées autour de la scène de telle façon à présenter des espacements inter-paires entre deux paires adjacentes de caméras qui sont plus grands que ledit certain espacement intra-paire, dans lequel ledit dispositif de traitement numérique est configuré en outre de manière à appliquer un traitement de stéréoscopie par comparaison entre les images produites par une caméra d'une première paire desdites paires de caméras et les images produites par une caméra d'une seconde paire desdites paires de caméras, la seconde paire de caméras étant adjacente à la première paire de caméras et espacée de cette première paire de caméra d'un espacement inter-paire plus grand que l'espacement intra-paire, afin de produire des données de modélisation supplémentaires, dans lequel les caméras de ladite première paire de caméras sont disposées l'une à côté de l'autre sensiblement dans un même plan horizontal, et les caméras de ladite seconde paire de caméras sont disposées l'une au-dessus de l'autre sensiblement dans un même plan vertical.

En particulier, les données de modélisation obtenues par traitement stéréoscopique comprennent des informations de profondeur déduites d'une comparaison entre les points de vue de deux caméras, informations à partir desquelles une modélisation tridimensionnelle de la scène peut être calculée.

L'utilisation de paires de caméras relativement faiblement espacées et dans un même plan horizontal ou vertical permet de travailler avec des algorithmes classique de fusion de stéréoscopie binoculaire, sans avoir recours à des algorithmes dits « multi-baselines stereo » ou MBS, plus lourds en terme de calculs et moins efficaces.

Dans ce système, le dispositif de calcul modélise la scène à partir de vues prises par des caméras d'espacements variés en ajoutant à des comparaisons de données issues de paires de caméras faiblement espacées des comparaisons de données obtenues à partir de caméras espacées plus largement, ce qui amène une richesse d'information inaccessible au cas de comparaisons de données uniquement issues de paires de caméras avec un espacement unique et faible entre ces caméras, rendant ainsi la modélisation de meilleure qualité et plus robuste.

En outre, la plage de profondeur pouvant être effectivement étudiée par deux caméras dépendant de l'espacement entre celles-ci, lorsque des espacements différents entres caméras sont mis à profit au cours d'un traitement par stéréoscopie, le volume effectivement étudié par l'ensemble des caméras est plus grand que si un espacement unique était utilisé.

Enfin, des espacements relativement larges entre caméras permettent de réduire leur nombre tout en couvrant l'ensemble de la scène.

En particulier, une même caméra étant en outre utilisée non seulement au sein de la paire dont elle fait partie mais également en tandem avec une caméra d'une autre paire, ceci augmente le nombre de comparaisons de données possibles et donc la richesse d'information utilisable sans augmenter le nombre de caméras utilisées.

L'invention peut avantageusement présenter les particularités suivantes :
- ladite caméra de la seconde paire de caméras peut être située au-dessus de l'autre caméra de la seconde paire de caméras,
- les caméras de la seconde paire de caméras peuvent être situées plus bas que les caméras de la première paire de caméras, et
- ladite caméra de la première paire de caméras et ladite caméra de la seconde paire de caméras peuvent être alignées selon une direction faisant un angle compris entre 5° et 20° avec un plan horizontal ou un axe vertical ;
- lesdites caméras peuvent être distribuées autour de la scène sur une surface virtuelle en forme de sphère présentant un certain rayon, ledit certain espacement intra-paire pouvant être tel qu'un rapport algébrique dudit certain espacement sur ledit certain rayon est inférieur à 0,35 ;
- lesdits espacements inter-paires entre deux paires adjacentes de caméras peuvent être plus grands que ledit certain espacement intra-paire d'un facteur au moins égal à 1,4 ;
- lesdites caméras peuvent être distribuées autour de la scène de manière à former une troisième paire de caméras présentant un espacement inter-paire avec la seconde paire de caméras qui est plus grand que ou égal à l'espacement inter-paire entre la seconde paire de caméras et la première paire de caméras, et le dispositif de calcul peut être configuré de manière à appliquer ledit traitement numérique de stéréoscopie par comparaison entre les images produites par une caméra de la troisième paire de caméras et les images produites par une des caméras de la seconde paire de caméras, afin de produire des données de modélisation supplémentaires ;
- les caméras de la troisième paire de caméras peuvent être disposées l'une à côté de l'autre dans un même plan horizontal, la troisième paire de caméras peut être décalée verticalement par rapport à la première paire de caméras, lesdites première et troisième paires de caméras peuvent être décalées horizontalement l'une par rapport à l'autre et une caméra de la troisième paire de caméras peut être alignée verticalement avec une caméra de la première paire de caméras, la seconde paire de caméras peut être décalée horizontalement par rapport aux première et troisième paires de caméras, et le dispositif de calcul peut être configuré de manière à appliquer un traitement numérique de stéréoscopie par comparaison entre les images produites par les caméras desdites première et troisième paires de caméras qui sont en alignement vertical, et/ou entre les images produites par les caméras desdites seconde et troisième paires de caméras, en particulier les images produites par l'autre caméra de la seconde paire de caméras et ladite caméra de la troisième paire de caméras ;
- l'espacement inter-paire entre lesdites première et troisième paires de caméras est supérieur audit certain espacement intra-paire et peut être inférieur ou égal à l'espacement inter-paire entre lesdites seconde et troisième paires de caméras ; et
- lesdites première, seconde et troisième paires de caméras peuvent définir un motif qui est répété autour de la scène.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre une vue en perspective d'une disposition de caméras autour d'une scène selon un premier exemple ;
- la figure 1B illustre une portion d'une disposition de caméras selon un second exemple, dérivé du premier exemple ;
- la figure 2 illustre des coupes transversales de la disposition de la figure 1A ;
- la figure 3A illustre une projection cylindrique déroulée de la disposition de caméras de la figure 1B ;
- la figure 3B illustre une portion d'une projection cylindrique déroulée de la disposition de caméras des figures 1A et 2 ;
- la figure 3C représente une portion de la figure 3A ;
- les figures 4A-1 à 4A-3 illustrent des variantes de dispositions de caméras autour d'une scène ;

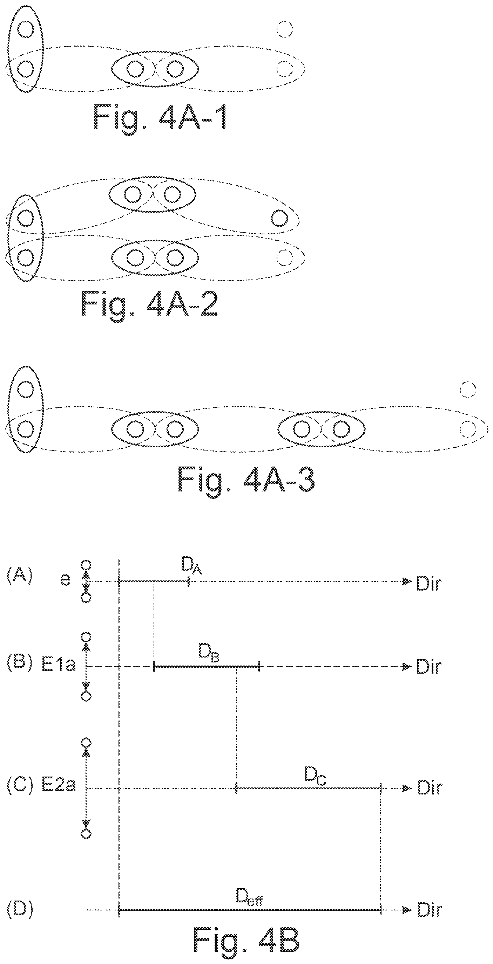

- la figure 4B illustre schématiquement des plages de profondeurs étudiées par des couples de caméras selon leurs espacements ;

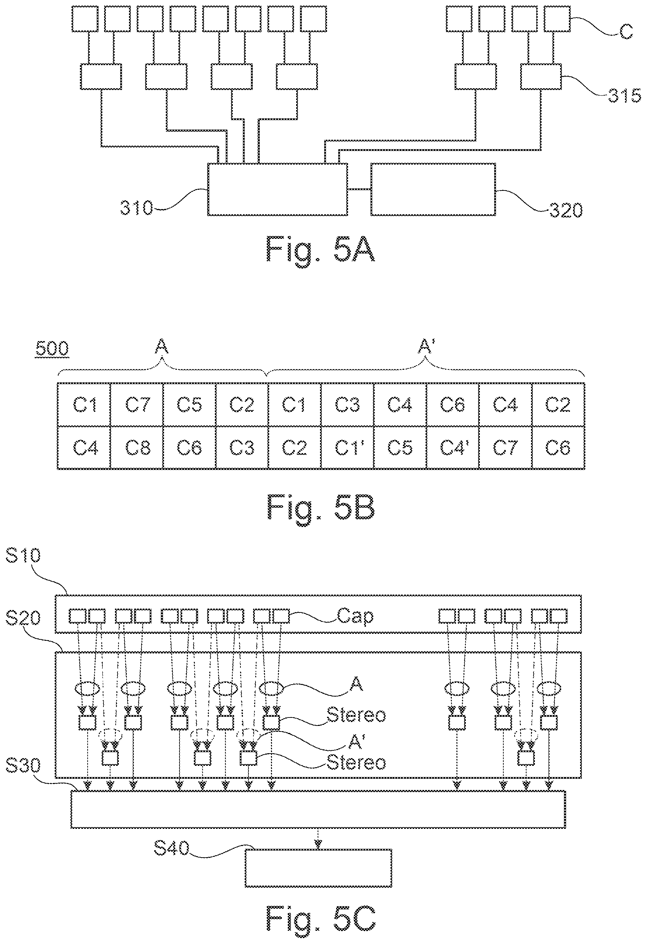

- la figure 5A illustre l'équipement d'un studio de photogrammétrie ;
- la figure 5B illustre un tableau d'associations entre caméras ; et
- la figure 5C est un diagramme schématisant le processus de traitement de données d'images dans un système de modélisation par photogrammétrie selon l'invention.

### Description d'un mode de réalisation

Un système de modélisation tridimensionnelle d'une scène par photogrammétrie multi-vue est constitué ici d'un studio comprenant une pluralité d'appareils de prise de vue entourant une scène à modéliser, ainsi que d'un dispositif de traitement numérique relié aux appareils de prises de vue et équipé d'au moins un logiciel de traitement de données d'images.

Les caméras peuvent être réparties sur une surface fictive correspondant à une sphère telle que celle de la demande de brevet FR 14 63073, ou toute autre surface permettant une répartition adéquate des appareils de prise de vue pour observer la scène sous de multiples points de vue.

Les appareils de prises de vues sont, dans le cadre de la photogrammétrie, des appareils de prise de vue monoscopiques, c'est-à-dire équipés d'un seul objectif centré sur un capteur photosensible, tels des appareils photos ou des caméras vidéo.

Dans le présent document, le terme caméra recouvre de façon générique les appareils de prise de vue monoscopiques tels que les appareils photos, les caméras vidéo, ou tout autre appareil de prise de vue capable de générer une image numérique plane selon un point de vue donné.

La figure 5A illustre le dispositif de traitement numérique 310, relié aux caméras C par l'intermédiaire de calculateurs intermédiaires 315 pouvant être pourvus de moyens de stockage intermédiaires des données d'images provenant des caméras C, le nombre de caméras C reliées à un calculateur intermédiaire 315 est arbitrairement fixé à deux sur cette figure.

Le dispositif de traitement numérique peut consister en un réseau d'ordinateurs qui comprend au moins un processeur relié à un moyen de stockage de données 320, équipé d'un système d'exploitation, d'une interface avec un utilisateur, et d'un ou plusieurs logiciels de traitements d'images, par exemple de stéréoscopie, de modélisation tridimensionnelle, et/ou de modélisation quadridimensionnelle intégrant les trois dimensions de l'espace et le temps pour générer des vidéos.

L'exploitation du système de photogrammétrie selon l'invention ne nécessite pas de traitement informatique ou algorithmique particulier par rapport aux systèmes de photogrammétrie conventionnels, de sorte qu'un système de calcul conventionnel de photogrammétrie est tout-à-fait apte à traiter les données issues des caméras d'un système de photogrammétrie selon l'invention.

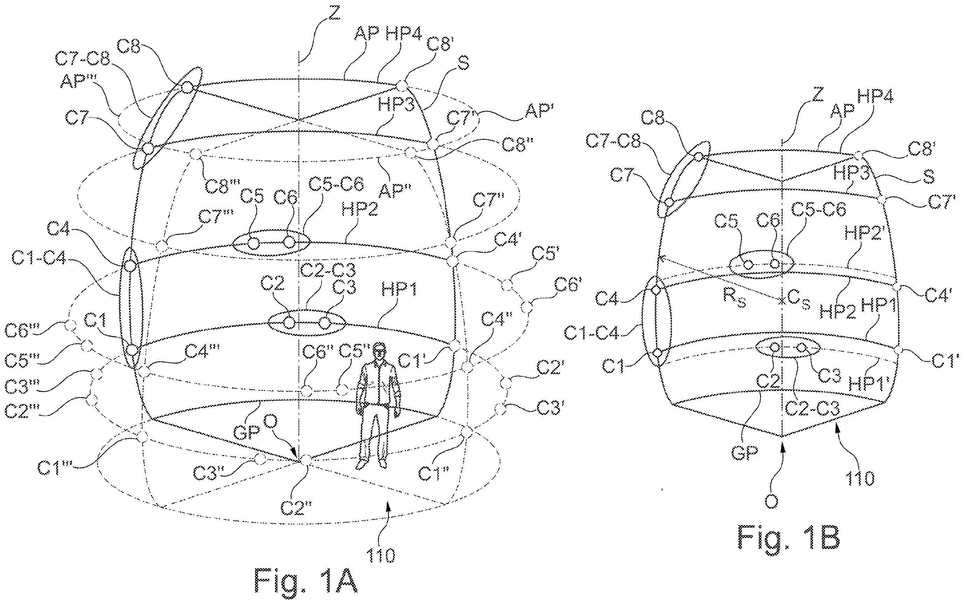

Un premier exemple de mise en œuvre de l'invention est illustré par les figures 1A, 2 et 3B, qui illustrent la disposition d'un ensemble de 32 caméras sur une surface fictive S autour d'une scène 110 à modéliser, surface centrée sur un axe vertical Z passant par un point O du sol du studio.

Dans ce premier exemple, 8 caméras C1 à C8, représentées en traits pleins, définissent un motif élémentaire occupant une portion angulaire AP de 90° de la scène, et sont réparties dans quatre plans horizontaux HP1 à HP4 qui sont décalés verticalement dans cet ordre les uns par rapport aux autres du bas vers le haut, au-dessus du plan GP représentant le sol du studio.

Les 8 caméras sont groupées en quatre paires de caméras qui présentent ici sensiblement un même espacement intra-paire e : deux paires C2-C3 et C5-C6 qui sont formées chacune de deux caméras sensiblement alignées horizontalement l'une par rapport à l'autre et appartiennent aux plans horizontaux HP1 et HP2, respectivement, et deux paires C1-C4 et C7-C8 qui sont formées des quatre caméras C1, C4, C7 et C8 sensiblement alignées verticalement les unes par rapport aux autres, au moins lorsque vues d'un point situé sur l'axe Z, c'est-à-dire situées à l'intersection de la surface S avec un plan vertical passant par l'axe Z, et situées respectivement dans les plans horizontaux HP1, HP2, HP3 et HP4.

La disposition des 24 autres caméras, représentées en traits pointillés, définit un motif global qui se déduit en répétant 3 fois le motif élémentaire par des rotations d'un quart, un demi, et trois quarts de tour autour de l'axe vertical Z, qui permettent de déduire les emplacements des 24 caméras C1' à C8', C1'' à C8'' et C1''' à C8''', respectivement dans trois portions angulaires AP', AP" et AP'''.

Les deux paires C2-C3 et C5-C6 sont ici décalées horizontalement l'une par rapport à l'autre d'une amplitude correspondant à un espacement intra-paire e, de telle sorte que la caméra C2 est, au moins lorsque vue d'un point situé sur l'axe Z, sensiblement alignée verticalement avec la caméra C6, ces deux caméras, C2 et C6, étant équidistante des caméras C1 et C'1 d'une part, et des caméras C4 et C4' d'autre part.

Dans ce document, l'expression « paire de caméras » désigne deux caméras espacées entre elles d'une distance inférieure à celles séparant l'une de ces deux caméras de toute autre caméra du système, de sorte que chaque caméra du système n'a qu'une seule plus proche voisine, à la différence de studios conventionnels qui présentent des caméras réparties de façon sensiblement homogène autour d'une scène à modéliser de sorte que ces caméras ont plus d'une plus proche voisine.

En particulier, selon cette configuration, et comme détaillé par la suite, le maillage par des caméras d'une sphère d'observation d'une scène présente une densité en caméras qui est hétérogène dans la surface effectivement couverte par ces caméras, ce qui peut se caractériser en ce que les caméras sont disposées selon un motif élémentaire, chaque caméra disposée à un emplacement donné de ce motif élémentaire ayant un environnement local propre sensiblement différent de celui des caméras disposées aux autres emplacements de ce motif élémentaire.

Un avantage d'une telle configuration réside dans le fait de ne pas être contraint par la recherche d'une répartition homogène des caméras, ou d'un environnement local similaire pour chaque caméra, ce qui permet une optimisation poussée du placement des caméras autour de la scène et la réduction de leur nombre sans que cela se fasse au détriment de la qualité de la modélisation de la scène observée.

En particulier, dans ce document, l'environnement local d'une caméra donnée est défini par les positions, caractérisées par les directions et les distances des autres caméras du système par rapport à cette caméra, en considérant au moins les deux caméras les plus proches de cette caméra donnée, comme par exemple deux caméras, trois caméras, quatre caméras, ou jusqu'au nombre de caméras du motif élémentaire moins une.

Par exemple, les caméras C1, C1', C1'' et C1''' correspondent toutes au même emplacement du motif élémentaire défini par C1, et chacune de ces caméras a un environnement local propre sensiblement différent de celui des caméras C2 à C2''', C3 à C3''', C4 à C4''', C5 à C5‴, C6 à C6‴, C7 à C7‴ et C8 à C8‴ correspondant respectivement aux autres emplacements de ce motif élémentaire définis par les caméras C2 à C8.

Dans cet exemple, l'environnement local de la caméra C1 peut être caractérisé par les directions et distances des quatre caméras C4, C5, C7 et C3' par rapport à C1.

Le maillage de caméras selon la répétition du motif élémentaire de ce mode de réalisation de l'invention se distingue ainsi d'un maillage de caméras constitué de motifs réguliers tel que des rectangles ou des triangles répétés de manière à paver une surface d'observation telle qu'une sphère entourant la scène, dont les caméras vont typiquement avoir des environnements locaux propres sensiblement similaires, les caméras des bords du maillage ayant bien entendu un environnement local particulier.

Les caméras des paires de caméras sont préférentiellement alignées horizontalement ou verticalement entre elles afin de maximiser la qualité de l'information pouvant être obtenue, et ce en raison de l'alignement horizontal des capteurs de ces caméras en raison de l'alignement des photosites au sein des capteurs.

En particulier, les capteurs de caméras sont conventionnellement constitués de pixels photosensibles répartis en lignes et en colonnes perpendiculaires aux lignes ; ainsi, dire que deux caméras sont alignées horizontalement signifie que ces caméras sont disposées dans un même plan horizontal, les lignes de pixels des capteurs de ces caméras étant situées dans ce même plan horizontal ; de même, dire que deux caméras sont alignées verticalement signifie que ces caméras sont disposées dans un même plan vertical, les colonnes de pixels des capteurs de ces caméras étant situées dans ce même plan vertical ; aligner ainsi les caméras des paires permet aux algorithmes de modélisation de fonctionner de façon optimale au sein de chaque paire de caméras.

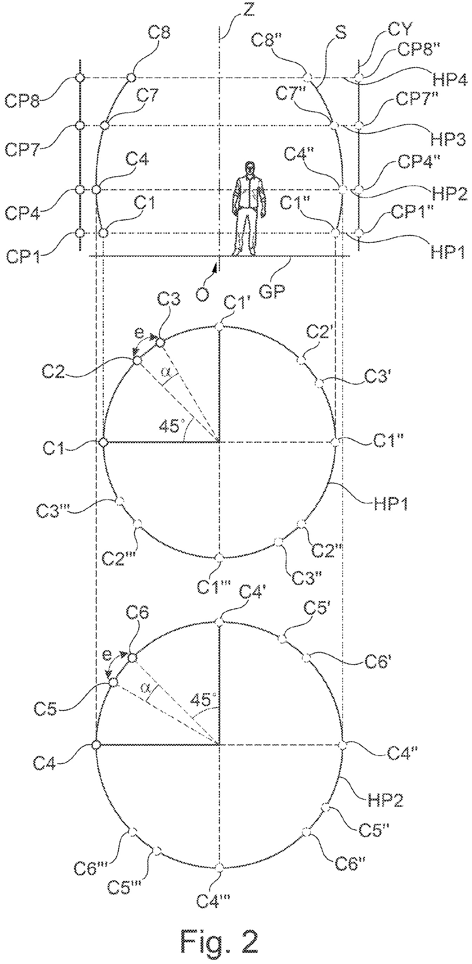

Il peut être avantageux que les caméras des paires présentent entre elles un espacement angulaire α à un centre de la scène compris entre 5 et 15°, illustré sur la figure 2 pour les cas des paires C2-C3 et C5-C6, conventionnellement considéré comme permettant d'obtenir des informations stéréoscopiques de bonne qualité vis-à-vis des algorithmes de calcul.

Rapprocher l'angle α de la borne supérieure des 15° contribue à minimiser le nombre de caméras nécessaires à une bonne couverture de la scène tout en maintenant la qualité de l'information obtenue par les paires de caméras.

Dans le cas particulier où des triplets de caméras - une caméra centrale flanquée de deux caméras périphériques entourant la caméra centrale utilisées dans une unité de vision trinoculaires - sont utilisés, les paires de caméras correspondraient à deux des caméras d'un triplet, les deux caméras périphériques ou la caméra centrale et l'une des caméras périphériques.

De la même manière, dans le cas particulier où des quadriplets de caméras - quatre caméras utilisées dans une unité de vision quadrinociulaire - sont utilisés, les paires de caméras correspondraient à deux des caméras d'un quadriplet, ce raisonnement s'appliquant à tout groupe de caméras fonctionnant en tant qu'une unité de vision.

La figure 2 illustre trois coupes de la disposition des caméras de la figure 1A : une coupe verticale selon l'axe C1-C1" et deux coupes horizontales selon les plans HP1 et HP2.

La figure 2 illustre en outre une projection cylindrique des emplacements des caméras appartenant à la coupe verticale selon l'axe C1-C1" sur un cylindre Cy d'axe Z : les caméras C1, C4, C7, C8, C1'', C4'', C7" et C8" se projettent en CP1, CP4, CP7, CP8, CP1", CP4", CP7" et CP8" respectivement.

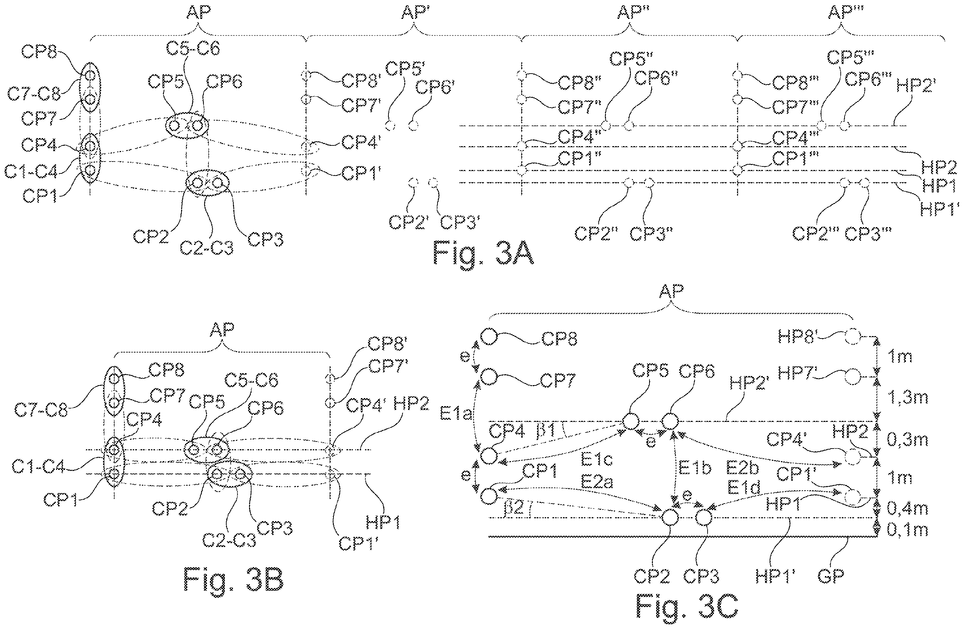

Un second exemple, illustré par les figures 1B, 3A et 3C, diffère du premier exemple des figures 1A, 2 et 3B en ce que les paires de caméras C2-C3 et C5-C6 sont positionnées respectivement dans un plan HP1' plus bas que le plan HP1 et dans un plan HP2' plus haut que le plan HP2.

En dehors de cet aspect, la description de l'un de ces deux exemples s'applique à l'autre, et inversement.

Les principes généraux guidant la répartition des caméras autour de la scène sont les suivants.

La densité des caméras est plus forte dans une plage verticale considérée comme plus importante pour une future visualisation de la scène et/ou plus sensible car se trouvant face à des portions de la scène pouvant être facilement masquées.

Ainsi, il peut être avantageux de concentrer les caméras sur une plage verticale correspondant à une hauteur de visage d'une personne fictive contemplant la scène, assise ou debout.

De plus, dans le cas d'une scène dont le sujet est un personnage, un bras du personnage peut masquer son tronc ou son visage à une caméra donnée située à hauteur d'homme, ce qui impose de multiples prises de vues à des hauteurs proches, et donc de multiples caméras, pour assurer une bonne couverture du sujet.

Inversement, puisqu'une vue plongeante, prise de haut, sur le personnage est généralement dégagée et moins difficile à modéliser qu'une vue à hauteur de visage, relativement peu de caméras situées en hauteur sont nécessaires à une modélisation de qualité.

Ces principes généraux amènent à une densité plus forte des caméras pour la plage verticale des plans horizontaux bas HP1, HP1', HP2 et HP2' que pour la plage verticale des plans horizontaux haut HP3 et HP4.

Selon l'invention, les paires de caméras C1-C4, C7-C8, C2-C3, ou C5-C6 sont distribuées autour de la scène de telle façon à présenter des espacements inter-paires E1a, E1b, E1c ou E2a entre deux paires adjacentes de caméras, qui sont plus grands qu'un espacement intra-paire e d'une des deux paires adjacentes correspondantes de caméras, et le dispositif de calcul 310 est configuré de manière à appliquer un traitement numérique de stéréoscopie par comparaison entre des images produites par une caméra, par exemple C5 d'une première paire de caméras C5-C6, et des images produites par une caméra, par exemple C4, d'une seconde paire de caméras C1-C4 adjacente à la première paire de caméras C5-C6, afin de produire des données de modélisation supplémentaires.

Un espacement inter-paire entre deux paires de caméras est défini ici comme la distance séparant les deux caméras les plus proches l'une de l'autre des deux paires de caméras considérées, comme par exemple E1a, qui correspond à la distance entre les caméras C4 et C7, et qui représente la distance inter-paires entre les paires C1-C4 et C7-C8.

La figure 3A représente une projection cylindrique déroulée des emplacements des caméras de la figure 1B, CP1 à CP8, CP1' à CP8', CP1" à CP8" et CP1''' à CP8"', projection similaire à celle de la figure 2, et la figure 3C représente en particulier la projection des caméras de la portion angulaire AP.

La description ci-dessous se limite à la portion angulaire AP, mais il doit être compris que, par symétrie, cette description s'étend aux portions angulaires AP', AP'' et AP"'.

Un tableau 500, illustrée par la figure 5B, spécifie des associations entre caméras et est enregistré dans une mémoire informatique sous forme d'un fichier accessible au dispositif de traitement numérique 310, ces associations indiquant audit dispositif de traitement numérique d'appliquer un traitement numérique de stéréoscopie par comparaison entre les données d'image des caméras associées deux à deux.

Ce tableau indique des associations A entre les caméras des paires de caméras C1-C4, C7-C8, C5-C6 et C2-C3, illustrées par les ellipses en traits pleins de la figure 3A, mais également des associations A' entre les caméras C1 et C2, C3 et C1', C4 et C5, C6 et C4', C4 et C7, et C2 et C6, qui appartiennent respectivement à des paires différentes, illustrées par les ellipses en traits pointillés de la figure 3A.

L'ajout de ces associations A' permet d'augmenter, à nombre de caméras constant la quantité d'information exploitable en vue d'une modélisation tridimensionnelle par photogrammétrie.

Ces associations peuvent être déterminées par une personne responsable de l'optimisation du système pour une modélisation et des objectifs donnés, et sont valables pour le premier exemple comme pour le second exemple, qui est détaillé plus en détail ci-dessous.

Les dimensions indiquées numériquement sur la figure 3C sont exprimées en mètre et correspondent aux distances séparant les plans dans lesquels sont situées les caméras, pour le cas particulier où elles sont disposées à la surface d'une surface virtuelle S ayant la forme d'une sphère de centre Cs et de rayon Rs de 4 mètres, centrée sur la scène 110, comme indiqué sur la figure 1B.

Bien entendu, le placement des caméras peut être modifié selon le type de scène à modéliser et les objectifs précis de la modélisation.

La figure 3C indique que les paires de caméras C1-C4, C2-C3, C5-C6 et C7-C8 présentent chacune sensiblement un même espacement intra-paire e ; les caméras des associations de caméras C4 et C7, C2 et C6, C4 et C5, et C3 et C1' présentent entre elles, respectivement, des espacements inter-paires E1a, E1b, E1c et E1d ; les caméras des associations de caméras C1 et C2, et C6 et C4' présentent entre elles, respectivement, des espacements inter-paires E2a et E2b.

Les espacements inter-paires E1a, E1b, E1c et E1d peuvent être plus grands que l'espacement intra-paire e d'un facteur F1 au moins égal à 1,4, de préférence au moins égal à 1,5, et inférieur à 2,2, de préférence inférieur à 1,9, et les espacements inter-paires E2a et E2b peuvent être plus grand que les espacements inter-paire E1a, E1b, E1c et E1d d'un facteur F2 au moins égal à 1,2, de préférence au moins égal à 1,4, et inférieur à 2,2, de préférence inférieur à 1,9.

Les facteurs F1 et F2 ci-dessus assurent une réduction significative du nombre de caméras nécessaires par rapport à l'usage du seul espacement intra-paire e tout en permettant la déduction, par traitement stéréoscopique, d'informations significativement différentes de celles pouvant être déduites en utilisant des paires de caméras uniquement séparées d'espacements de valeur unique e.

Varier ainsi les espacements entre les caméras permet d'obtenir un panachage d'espacements et d'augmenter substantiellement la richesse des informations exploitées par l'algorithme de modélisation mis en œuvre par le dispositif de calcul.

Cependant, l'invention n'est pas limitée aux rapports F1 et F2 donnés ci-dessus, et les dimensions e, E1a, E1b, E1c, E1d, E2a et E2b peuvent varier continûment et ne pas être uniques pour une disposition de caméras donnée, l'important étant de panacher les espacements entre les caméras.

Afin d'obtenir des informations stéréoscopiques panachant une large gamme d'espacements entre les caméras, l'espacement intra-paire e est de préférence relativement petit, par exemple tel que son rapport sur le rayon Rs d'une sphère sur laquelle sont disposées les caméras, e/Rs, est inférieur à 0,35, plus préférablement inférieur ou égal à 0,26, et supérieur ou égal à 0,09.

L'espacement intra-paire e et les espacements inter-paires E1a et E1b valent ici approximativement 1 m, 1,6 m et 1,7 m, respectivement, E1c et E1d valent ici approximativement 2 m, et E2a et E2b valent ici approximativement 3 m, ces valeurs étant données à 10% près, lorsque le rayon Rs de ladite sphère vaut 4 mètres.

Les figures 4A-1, 4A-2 et 4A-3 illustrent des variantes de disposition de caméras, définissant des motifs élémentaires pouvant chacun couvrir une portion angulaire de largeur angulaire arbitraire et pouvant être répétés autour d'une scène de manière à entourer celle-ci partiellement ou complètement, et utilisent les mêmes conventions graphiques que la figure 3A.

Dans le cas où une scène doit être complètement entourée de caméras, il est possible de répéter 4 fois un même motif élémentaire comme dans les premier et second exemples, mais il est également possible d'employer des motifs élémentaires couvrant des portions angulaires de 30°, 45°, 60°, 120° ou 180° répétés respectivement 9 fois, 8 fois, 6 fois, 3 fois et 2 fois, ou une combinaison quelconque de motifs élémentaires.

Les inventeurs ont déterminé que grâce au panachage, d'une part, des orientations horizontales et verticales de paires de caméras et, d'autre part, des espacements séparant les caméras des associations de caméras, les algorithmes de modélisation disposent globalement d'une richesse d'informations sur la scène plus importante que si, pour un nombre de caméras fixé, un espacement unique était employé entre caméras associées, ce qui mène à une amélioration qualitative de la modélisation.

Les inventeurs ont également déterminé que la dégradation de la qualité d'informations issues d'associations de caméras ne présentant pas un alignement sensiblement vertical ou horizontal entre elles (c'est-à-dire un désalignement de l'ordre de 1° ou inférieur, et de toutes manières clairement inférieur à 5°), telles les caméras des associations de caméras du second exemple C1 et C2, C3 et C1', C4 et C5 et C6 et C4', peut être avantageusement compensée par une extension de la surface où sont réparties les caméras, et donc de la zone de provenance des informations.

Afin de bénéficier des avantages de tels alignements s'écartant de l'horizontale et de la verticale sans que la réduction de qualité de l'information due au désalignement ne devienne rédhibitoire, deux caméras associées peuvent préférablement être alignées selon une direction faisant un angle de plus de 5° mais ne dépassant pas 20°, et préférablement ne dépassant pas 15°, avec un plan horizontal ou une direction verticale.

Par exemple, comme visible sur la figure 3C, les angles de désalignement β1 et β2 des caméras C4 et C5 d'une part, et C1 et C2 d'autre part, avec un niveau horizontal, HP1' ou HP2', étendent la surface couverte par le motif élémentaire du second exemple par rapport au premier exemple.

L'élargissement de la surface couverte peut se visualiser en comparant la portion angulaire AP de la figure 3A correspondant au second exemple qui met à profit cet élargissement, avec la même portion angulaire AP du premier exemple illustré par la figure 3B, dans lequel les caméras associées sont horizontalement ou verticalement alignées.

Ainsi, la disposition des caméras et les associations entre elles sont définies de sorte que l'information collectée provient d'une large surface d'observation de manière quasi-continue, qui peut être visualisée par les surfaces couvertes par les ellipses de la figure 3A, et non pas d'une zone étroite, comme dans le cas de la figure 3B, ou d'un ensemble de zones séparées les unes des autres, ce qui permet à un algorithme mis en œuvre par le dispositif de traitement numérique de procéder efficacement à la modélisation tridimensionnelle.

Un autre avantage du panachage des espacements entre les caméras des associations de caméras est l'augmentation du volume de modélisation.

En effet, comme illustré schématiquement par la figure 4B pour des caméras d'espacements e, E1a et E2a, la plage de profondeurs effectivement étudiée par une paire de caméras lors d'une mesure stéréoscopique, c'est-à-dire les profondeurs pour lesquelles de l'information exploitable peut être obtenue, dépend de l'espacement entre les deux caméras considérées.

Deux caméras faiblement espacées étudient une plage de profondeurs D_{A} relativement restreinte et proche des caméras dans une direction Dᵢᵣ comme illustré par la configuration (A) de la figure 4B, alors que des paires de caméras plus espacées étudient des plages de profondeurs D_{B} et D_{C} plus étendues et plus éloignées des caméras comme pour les configurations (B) et (C) de la figure 4B.

Le recouvrement des volumes étudiés par des paires de caméras combinant des espacements petits avec des espacements plus grands permet donc d'étudier un volume de la scène plus important que lorsque des caméras présentant un espacement unique sont employées, principe illustré schématiquement par la configuration (D) qui montre une profondeur étudiée effective D_{eff} par les trois paires de caméras des configurations (A), (B) et (C).

Les avantages des dispositions de caméras pour procéder à la modélisation tridimensionnelle par photogrammétrie comme décrit ci-dessus sont particulièrement apparents pour un nombre de caméras utilisées compris entre 20 et 64, plus particulièrement entre 24 et 58, et encore plus particulièrement entre 24 et 48.

La figure 5C est un diagramme schématisant un procédé de modélisation tridimensionnelle d'une scène par photogrammétrie utilisant le système décrit plus haut, et son application à la génération de vues 2D de ladite scène.

Au cours d'une étape S10, les caméras capturent chacune, en parallèle avec les autres caméras, une image de la scène à partir de leurs positions respectives au cours d'étapes de captures Cₐₚ simultanées et produisent des images numériques.

Au cours d'une étape S20, le dispositif de traitement numérique applique un traitement stéréoscopique Sₜₑᵣₑₒ aux images numériques issues de chacune des paires de caméras, selon des associations représentées par A dans le diagramme et illustrées dans le tableau 500 d'associations entre caméras de la figure 5B, afin de produire des données de modélisation.

Selon l'invention, au cours de l'étape S20 et au même niveau logique que les traitements numérique Sₜₑᵣₑₒ, le dispositif de traitement numérique applique également le traitement stéréoscopique Sₜₑᵣₑₒ à des images numériques issues de caméras qui appartiennent à des paires différentes mais sont associées deux à deux selon des associations représentées par A' dans le diagramme, en accord avec les associations A' indiquées dans le tableau 500 d'association entre caméras, afin de produire des données de modélisation supplémentaires.

Dans la figure 5C, les flèches en traits pleins liant les étapes S10 à S20 indiquent l'utilisation de données provenant de caméras d'une même paire ; les flèches en traits pointillés indiquent l'utilisation de données provenant de caméras de paires différentes.

Au cours d'une étape S30, les données de modélisation sont fusionnées de manière à produire un modèle tridimensionnel de la scène étudiée par les caméras.

Il est à noter que les étapes S10 à S30 mettent en œuvre des méthodes connues dans le domaine de la photogrammétrie qui, en dehors de la spécification des associations de caméras appartenant à des paires différentes et entre lesquelles le dispositif de calcul doit appliquer les traitements stéréographiques, ne nécessitent pas d'ajustement particulier pour appliquer l'invention.

L'étape S30 marque la fin de la modélisation tridimensionnelle proprement dite, mais une application importante de cette modélisation, la génération d'images virtuelles de la scène telle qu'observée selon des points de vue arbitraires, se base sur le modèle tridimensionnel pour générer, au cours d'une étape S40, des images virtuelles de la scène selon des méthodes de rendu conventionnelles.

## Revendications

1. Système de modélisation tridimensionnelle d'une scène (110) par photogrammétrie multi-vue, comprenant des caméras (C1 à C8, C1' à C8', C1'' à C8" et C1''' à C8"') destinées à être regroupées en paires (C1-C4, C2-C3, C5-C6, C7-C8) de caméras placées autour de la scène pour produire des images de celle-ci avec des points de vue différents, les caméras de chaque paire de caméras présentant entre elles un certain espacement intra-paire (e), et un dispositif de traitement numérique (310) qui, à partir des images produites par les caméras, est configuré pour produire des données de modélisation en appliquant un traitement de stéréoscopie par comparaison entre les images produites respectivement par les deux caméras de chaque paire (C1-C4, C2-C3, C5-C6, C7-C8) de caméras, dans lequel :
lesdites paires (C1-C4, C2-C3, C5-C6, C7-C8) de caméras sont distribuées autour de la scène de telle façon à présenter des espacements inter-paires (E1a, E1b, E1c, E2a) entre deux paires adjacentes de caméras qui sont plus grands que ledit certain espacement intra-paire (e), et
ledit dispositif de traitement numérique (310) est configuré en outre de manière à appliquer un traitement de stéréoscopie par comparaison entre les images produites par une caméra (C5) d'une première paire (C5-C6) desdites paires de caméras et les images produites par une caméra (C4) d'une seconde paire (C1-C4) desdites paires de caméras, la second paire (C1-C4) de caméras étant adjacente à la première paire (C5-C6) de caméras et espacée de cette première paire de caméra d'un espacement inter-paire (E1c) plus grand que l'espacement intra-paire (e), afin de produire des données de modélisation supplémentaires, ledit système de modélisation étant **caractérisé en ce que** :
les caméras de ladite première paire (C5-C6) de caméras sont disposées l'une à côté de l'autre sensiblement dans un même plan horizontal (HP2'), et
les caméras de ladite seconde paire (C1-C4) de caméras sont disposées l'une au-dessus de l'autre sensiblement dans un même plan vertical.

2. Le système de modélisation selon la revendication 1, **caractérisé en ce que** :
ladite caméra (C4) de la seconde paire de caméras est située au-dessus de l'autre caméra (C1) de la seconde paire de caméras,
les caméras de la seconde paire (C1-C4) de caméras sont situées plus bas que les caméras de la première paire (C5-C6) de caméras, et
ladite caméra (C5) de la première paire (C5-C6) de caméras et ladite caméra (C4) de la seconde paire (C1-C4) de caméras sont alignées selon une direction faisant un angle (β1) compris entre 5° et 20° avec un plan horizontal (HP2') ou un axe vertical.

3. Le système de modélisation selon la revendication 1 ou 2, **caractérisé en ce que** lesdites caméras sont distribuées autour de la scène sur une surface virtuelle (S) en forme de sphère présentant un certain rayon (Rs), ledit certain espacement intra-paire (e) étant tel qu'un rapport algébrique dudit certain espacement sur ledit certain rayon (Rs) est inférieur à 0,35.

4. Le système de modélisation selon l'une quelconque des revendications 1 à 3, **caractérisé en ce que** lesdits espacements inter-paires (Ela, E1b, E1c, E2a) entre deux paires adjacentes de caméras sont plus grands que ledit certain espacement intra-paire (e) d'un facteur (F1) au moins égal à 1,4.

5. Le système de modélisation selon l'une quelconque des revendications 1 à 4, **caractérisé en ce que** :
lesdites caméras sont distribuées autour de la scène de manière à former une troisième paire (C2-C3) de caméras présentant un espacement inter-paire (E2a) avec la seconde paire (C1-C4) de caméras qui est plus grand que ou égal à l'espacement inter-paire (E1c) entre la seconde paire (C1-C4) de caméras et la première paire (C5-C6) de caméras, et
le dispositif de calcul est configuré de manière à appliquer ledit traitement numérique de stéréoscopie par comparaison entre les images produites par une caméra (C2) de la troisième paire (C2-C3) de caméras et les images produites par une (C5, C6) des caméras de la seconde paire (C5-C6) de caméras, afin de produire des données de modélisation supplémentaires.

6. Le système de modélisation selon la revendication 5, **caractérisé en ce que** :
les caméras de la troisième paire (C2-C3) de caméras sont disposées l'une à côté de l'autre dans un même plan horizontal (HP1'),
la troisième paire (C2-C3) de caméras est décalée verticalement par rapport à la première paire (C5-C6) de caméras,
lesdites première et troisième paires (C5-C6, C2-C3) de caméras sont décalées horizontalement l'une par rapport à l'autre et une caméra (C2) de la troisième paire (C2-C3) de caméras est alignée verticalement avec une caméra (C6) de la première paire (C5-C6) de caméras,
la seconde paire (C1-C4) de caméras est décalée horizontalement par rapport aux première et troisième paires (C5-C6, C2-C3) de caméras, et
le dispositif de calcul est configuré de manière à appliquer un traitement numérique de stéréoscopie par comparaison entre :
- les images produites par les caméras (C6, C2) desdites première et troisième paires (C5-C6, C2-C3) de caméras qui sont en alignement vertical, et/ou
- les images produites par les caméras (C1, C2) desdites seconde et troisième paires (C1-C4, C2-C3) de caméras.

7. Le système de modélisation selon la revendication 6, **caractérisé en ce que** l'espacement inter-paire (E1b) entre lesdites première et troisième paires (C5-C6, C2-C3) de caméras est supérieur audit certain espacement intra-paire (e) et est inférieur ou égal à l'espacement inter-paire (E2a) entre lesdites seconde et troisième paires (C1-C4, C2-C3) de caméras.

8. Le système de modélisation selon la revendication 7, **caractérisé en ce que** lesdites première, seconde et troisième paires de caméras définissent un motif qui est répété autour de la scène.

## Patentansprüche

1. 3D-Szenenmodellierungssystem (110) durch Fotogrammetrie mit mehreren Ansichten, umfassend Kameras (C1 bis C8, C1' bis C8', C1" bis C8" und C1'" bis C8"'), die dazu bestimmt sind, zu Paaren (C1-C4, C2-C3, C5-C6, C7-C8) von Kameras gruppiert zu werden, die um die Szene herum angeordnet sind, um Bilder derselben mit unterschiedlichen Ansichtspunkten zu erzeugen, wobei die Kameras jedes Kamerapaars zwischen sich einen gewissen Paarabstand (e) aufweisen, und eine digitale Bearbeitungsvorrichtung (310), die auf Basis der von den Kameras erzeugten Bildern eingerichtet ist, um Modellierungsdaten zu erzeugen, wobei eine Stereoskopie-Bearbeitung durch Vergleich zwischen den jeweils von den zwei Kameras jedes Kamerapaars (C1-C4, C2-C3, C5-C6, C7-C8) erzeugten Bildern angewandt wird, wobei:
die Kamerapaare (C1-C4, C2-C3, C5-C6, C7-C8) um die Szene herum derart verteilt sind, dass sie Paarabstände (E1a, E1b, E1c, E2a) zwischen zwei aneinandergrenzenden Kamerapaaren aufweisen, die größer als der gewisse Paarabstand (e) sind, und
die digitale Bearbeitungsvorrichtung (310) ferner eingerichtet ist, um eine Stereoskopie-Bearbeitung durch Vergleich zwischen den von einer Kamera (C5) eines ersten Paars (C5-C6) der Kamerapaare und den von einer Kamera (C4) eines zweiten Paars (C1-C4) der Kamerapaare erzeugten Bildern anzuwenden, wobei das zweite Kamerapaar (C1-C4) an das erste Kamerapaar (C5-C6) angrenzt und zu diesem ersten Kamerapaar mit einem größeren Paarabstand (E1c) als der Paarabstand (e) beabstandet ist, um zusätzliche Modellierungsdaten zu erzeugen, wobei das Modellierungssystem **dadurch gekennzeichnet ist, dass**:
die Kameras des ersten Kamerapaars (C5-C6) nebeneinander im Wesentlichen in einer gleichen Horizontalebene (HP2') angeordnet sind, und
die Kameras des zweiten Kamerapaars (C1-C4) übereinander im Wesentlichen in einer gleichen Vertikalebene angeordnet sind.

2. Modellierungssystem nach Anspruch 1, **dadurch gekennzeichnet, dass**:
die Kamera (C4) des zweiten Kamerapaars über der anderen Kamera (C1) des zweiten Kamerapaars angeordnet ist,
die Kameras des zweiten Kamerapaars (C1-C4) weiter unten als die Kameras des ersten Kamerapaars (C5-C6) angeordnet sind, und
die Kamera (C5) des ersten Kamerapaars (C5-C6) und die Kamera (C4) des zweiten Kamerapaars (C1-C4) entlang einer Richtung ausgerichtet sind, die einen Winkel (ß1) zwischen 5° und 20° mit einer Horizontalebene (HP2') oder einer Vertikalachse bildet.

3. Modellierungssystem nach Anspruch 1 oder 2, **dadurch gekennzeichnet, dass** die Kameras um die Szene herum auf einer virtuellen Fläche (S) in Kugelform, die einen gewissen Radius (Rs) aufweist, verteilt sind, wobei der gewisse Paarabstand (e) derart ist, dass das algebraische Verhältnis des gewissen Abstands zum gewissen Radius (Rs) kleiner als 0,35 ist.

4. Modellierungssystem nach einem der Ansprüche 1 bis 3, **dadurch gekennzeichnet, dass** die Paarabstände (E1a, E1b, E1c, E2a) zwischen zwei aneinandergrenzenden Kamerapaaren um einen Faktor (F1) mindestens gleich 1,4 größer als der gewisse Paarabstand (e) sind.

5. Modellierungssystem nach einem der Ansprüche 1 bis 4, **dadurch gekennzeichnet, dass**:
die Kameras um die Szene herum derart verteilt sind, dass sie ein drittes Kamerapaar (C2-C3) bilden, die einen Paarabstand (E2a) mit dem zweiten Kamerapaar (C1-C4) aufweisen, der größer oder gleich dem Paarabstand (E1c) zwischen dem zweiten Kamerapaar (C1-C4) und dem ersten Kamerapaar (C5-C6) ist, und
die Berechnungsvorrichtung eingerichtet ist, um die digitale Stereoskopie-Bearbeitung durch Vergleich zwischen den von einer Kamera (C2) des dritten Kamerapaars (C2-C3) erzeugten Bildern und den von einer (C5, C6) der Kameras des zweiten Kamerapaars (C5, C6) erzeugten Bildern anzuwenden, um zusätzliche Modellierungsdaten zu erzeugen.

6. Modellierungssystem nach Anspruch 5, **dadurch gekennzeichnet, dass**:
die Kameras des dritten Kamerapaars (C2-C3) nebeneinander in einer gleichen Horizontalebene (HP1') angeordnet sind,
das dritte Kamerapaar (C2-C3) vertikal in Bezug zum ersten Kamerapaar (C5-C6) versetzt ist,
die ersten und dritten Kamerapaare (C5-C6, C2-C3) horizontal zueinander versetzt sind, und eine Kamera (C2) des dritten Kamerapaars (C2-C3) vertikal mit einer Kamera (C6) des ersten Kamerapaars (C5-C6) ausgerichtet ist,
das zweite Kamerapaar (C1-C4) horizontal in Bezug zu den ersten und dritten Kamerapaaren (C5-C6, C2-C3) versetzt ist, und
die Berechnungsvorrichtung eingerichtet ist, um eine digitale Stereoskopie-Bearbeitung anzuwenden, durch Vergleich zwischen:
- den von den Kameras (C6, C2) der ersten und dritten Kamerapaare (C5-C6, C2-C3) erzeugten Bildern, die vertikal ausgerichtet sind, und/oder
- den von den Kameras (C1, C2) der zweiten und dritten Kamerapaare (C1-C4, C2-C3) erzeugten Bildern.

7. Modellierungssystem nach Anspruch 6, **dadurch gekennzeichnet, dass** der Paarabstand (E1b) zwischen den ersten und dritten Kamerapaaren (C5-C6, C2-C3) größer als der gewisse Paarabstand (e) und kleiner oder gleich dem Paarabstand (E2a) zwischen den zweiten und dritten Kamerapaaren (C1-C4, C2-C3) ist.

8. Modellierungssystem nach Anspruch 7, **dadurch gekennzeichnet, dass** die ersten, zweiten und dritten Kamerapaare ein Motiv definieren, das um die Szene herum wiederholt wird.

## Claims

1. A 3D modelling system for three-dimensionally modelling a scene (110) by multi-view photogrammetry, which system comprises cameras (C1 to C8, C1' to C8', C1" to C8'' and C1''' to C8''') that are designed to be grouped together in pairs (C1-C4, C2-C3, C5-C6, C7-C8) of cameras that are placed around the scene to produce images of said scene with different viewpoints, the cameras in each pair of cameras having a certain intra-pair spacing (e) between them, and a digital processing device (310) that, from the images produced by the cameras, is configured to produce modelling data by applying stereoscopy processing by comparison between the images produced by respective ones of the two cameras of each pair (C1-C4, C2-C3, C5-C6, C7-C8) of cameras, in which system:
said pairs (C1-C4, C2-C3, C5-C6, C7-C8) of cameras are distributed around the scene in such a manner as to have inter-pair spacings (Ela, E1b, E1c, E2a) between two adjacent pairs of cameras that are larger than said certain intra-pair spacing (e); and
said digital processing device (310) is further configured in such a manner as to apply stereoscopy processing by comparison between the images produced by a camera (C5) of a first pair (C5-C6) of said pairs of cameras and the images produced by a camera (C4) of a second pair (C1-C4) of said pairs of cameras, the second pair (C1-C4) of cameras being adjacent to the first pair (C5-C6) of cameras and spaced apart from said first pair of cameras by an inter-pair spacing (E1c) that is greater than the intra-pair spacing (e), in order to produce additional modelling data, said modelling system being **characterized in that:**
the cameras of said first pair (C5-C6) of cameras are arranged side-by-side substantially in a same horizontal plane (HP2'); and
the cameras of said second pair (C1-C4) of cameras are arranged one above the other substantially in a same vertical plane.

2. The modelling system of claim 1, **characterized in that**:
said camera (C4) of the second pair of cameras is situated above the other camera (C1) of the second pair of cameras;
the cameras of the second pair (C1-C4) of cameras are situated lower than the cameras of the first pair (C5-C6) of cameras; and
said camera (C5) of the first pair (C5-C6) of cameras and said camera (C4) of the second pair (C1-C4) of cameras are aligned in a direction forming an angle (β1) lying in the range 5° to 20° with a horizontal plane (HP2') or with a vertical axis.

3. The modelling system of claim 1 or claim 2, **characterized in that** said cameras are distributed around the scene over a virtual surface (S) in the shape of a sphere having a certain radius (Rs), said certain intra-pair spacing (e) being such that an algebraic ratio of said certain spacing to said certain radius (Rs) is less than 0.35.

4. The modelling system of any one of claims 1 to 3, **characterized in that** said inter-pair spacings (E1a, E1b, E1c, E2a) between two adjacent pairs of cameras are larger than said certain intra-pair spacing (e) by a factor (F1) at least equal to 1.4.

5. The modelling system of any one of claims 1 to 4, **characterized in that**:
said cameras are distributed around the scene in such a manner as to form a third pair (C2-C3) of cameras having an inter-pair spacing (E2a) with the second pair (C1-C4) of cameras that is greater than or equal to the inter-pair spacing (E1c) between the second pair (C1-C4) of cameras and the first pair (C5-C6) of cameras; and
the computation device is configured in such a manner as to apply said stereoscopy digital processing by comparison between the images produced by a camera (C2) of the third pair (C2-C3) of cameras and the images produced by one (C5, C6) of the cameras of the second pair (C5-C6) of cameras, in order to produce additional modelling data.

6. The modelling system of claim 5, **characterized in that**:
the cameras of said third pair (C2-C3) of cameras are arranged side-by-side in a same horizontal plane (HP1');
the third pair (C2-C3) of cameras is offset vertically relative to the first pair (C5-C6) of cameras;
said first and third pairs (C5-C6, C2-C3) of cameras are offset horizontally relative to each other and a camera (C2) of the third pair (C2-C3) of cameras is aligned vertically with a camera (C6) of the first pair (C5-C6) of cameras;
the second pair (C1-C4) of cameras is offset horizontally relative to the first and third pairs (C5-C6, C2-C3) of cameras; and
the computation device is configured in such a manner as to apply stereoscopy digital processing by comparison between:
- the images produced by the cameras (C6, C2) of said first and third pairs (C5-C6, C2-C3) of cameras that are in vertical alignment; and/or
- the images produced by the cameras (C1, C2) of said second and third pairs (C1-C4, C2-C3) of cameras.

7. The modelling system of claim 6, **characterized in that** the inter-pair spacing (E1b) between said first and third pairs (C5-C6, C2-C3) of cameras is greater than said certain intra-pair spacing (e) and is less than or equal to the inter-pair spacing (E2a) between said second and third pairs (C1-C4, C2-C3) of cameras.

8. The modelling system of claim 7, **characterized in that** said first, second, and third pairs of cameras define a pattern that is repeated around the scene.
